# EUROPÄISCHE PATENTSCHRIFT

(11) **EP 4 261 196 B1**
(45) Veröffentlichungstag und Bekanntmachung des Hinweises auf die Patenterteilung: **04.12.2024**
(21) Anmeldenummer: 22167744.6
(22) Anmeldetag: 12.04.2022
(51) Int. Cl.: C04B 26/06, C04B 28/06, C04B 40/00

(54) **ZWEIKOMPONENTEN-MÖRTELMASSE UND DEREN VERWENDUNG**
DUAL COMPONENT MORTAR COMPOSITION AND ITS USE
SUBSTANCE DE MORTIER À DEUX COMPOSANTS ET SON UTILISATION

(43) Veröffentlichungstag der Anmeldung: 18.10.2023
(73) Patentinhaber: Hilti Aktiengesellschaft, 9494 Schaan (LI)
(72) Erfinder: Kumru, Memet-Emin, 86199 Augsburg (DE); Nickerl, Georg, 86911 Dießen am Ammersee (DE); Gaefke, Gerald, 87600 Kaufbeuren (DE)
(74) Vertreter: Hilti Aktiengesellschaft Corporate Intellectual Property

(56) Entgegenhaltungen:
- EP-A1- 3 299 350
- EP-A1- 3 299 351
- EP-A1- 3 702 339
- EP-A1- 3 854 769
- EP-A1- 3 882 291
- DE-B3- 102010 051 818

## Beschreibung

Die Erfindung betrifft eine Zweikomponenten-Mörtelmasse mit einer Harzkomponente (A), die wenigstens ein radikalisch härtbares Harz umfasst, und einer Härterkomponente (B) für das Harz der Harzkomponente (A). Gegenstand der Erfindung ist ferner die Verwendung der Mörtelmasse zur chemischen Befestigung von Bauteilen wie Ankergewindestangen, Bewehrungseisen, Gewindehülsen und Schrauben in Bohrlöchern, die in einen mineralischen Untergrund eingebracht sind.

Zur sicheren Befestigung von Bauteilen, wie Ankergewindestangen, Bewehrungseisen, Gewindehülsen und Schrauben, in einem mineralischen Untergrund wie Beton, Naturstein oder Putz werden zunächst die Bohrlöcher zur Aufnahme der zu befestigenden Bauteile mit den entsprechenden Abmessungen in den mineralischen Untergrund gebohrt. Anschließend werden die Bohrlöcher von Bohrstaub befreit, und die Zweikomponenten-Mörtelmasse wird nach Vermischen der Harzkomponente mit der Härterkomponente in das Bohrloch eingebracht. Danach wird das zu befestigende Bauteil in das mit der Mörtelmasse angefüllte Bohrloch eingeführt und justiert. Nach dem Aushärten der Mörtelmasse durch Umsetzung der Harzkomponente mit der Härterkomponente wird ein fester Halt des Bauteils im mineralischen Untergrund erreicht. Das Tragverhalten der so befestigten Bauteile hängt von mehreren Einflussgrößen ab, die üblicherweise als interne und externe Größen klassifiziert werden. Zu den internen Einflussgrößen zählen die chemische Zusammensetzung der Mörtelmasse, ihr Herstellungsprozess und die Verpackung der Mörtelmasse, die typischerweise in zwei getrennten Behältern vorliegende Komponenten umfasst.

Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Aus der EP 0 432 087 und der EP 0 589 831 sind Zweikomponenten-Mörtelmassen auf der Grundlage von Urethan(meth)acrylatharzen bekannt, die durch radikalische Polymerisation aushärten.

Die im Stand der Technik bekannten und als chemische Verbunddübel eingesetzten Mörtelmassen auf der Grundlage von radikalisch härtenden Reaktionsharzen zeigen bereits gute Lastwerte unter bestimmten Aushärtebedingungen. Die Aushärtebedingungen, z.B. auf einer Baustelle angetroffen werden, können jedoch breit variieren, beispielsweise im Hinblick auf Feuchtigkeit, und können die in der Praxis nicht beliebig beeinflusst werden.

Es ist bekannt, dass Wasser die Leistungsfähigkeit von chemischen Verankerungsmörteln beeinträchtigt, wie zum Beispiel in Cook, R. A., Konz, R. C., "Factors Influencing Bond Strength of Adhesive Anchors", ACI Structural Journal, 2001, 98, 76- 86 beschrieben. Es ist bekannt, dass das Vorhandensein von Wasser oder sogar Feuchtigkeit während des Einbaus eines chemischen Dübels die Leistung eines Klebeankersystems entweder mechanisch, chemisch oder sogar beides beeinflussen kann. Baustellenbedingungen, bei denen der Betonuntergrund nass ist, sind üblich und manchmal unerwartet.

Daher besteht ein Bedarf an chemischen Mörteln, die weniger empfindlich auf das Vorhandensein von Wasser reagieren, d. h. die in feuchten Löchern oder sogar wassergefüllten Bohrlöchern nicht so stark nachgeben. Das heißt, es ist ein Ziel der vorliegenden Erfindung, chemische Mörtel bereitzustellen, die einen minimalen Unterschied in der Haftfestigkeit zwischen trockenen und nassen Bedingungen aufweisen.

Die mögliche Verwendung von CaO (*"Branntkalk"*) als Füllstoff in chemischen Dübeln wird im Text der EP 2 248 781 erwähnt. In dieser Veröffentlichung finden sich jedoch keine Angaben über die Menge an CaO oder das Verhältnis von CaO zu herkömmlichem Füllstoff, und es wird auch keine Wirkung in Bezug auf das CaO an sich gezeigt.

Das Dokument EP 3 882 291 offenbart ein Kunstharz-Befestigungssystem für die chemische Befestigungstechnik, welches ein radikalisch härtbares Kunstharz, das einen radikalisch härtbaren Reaktivverdünner umfasst, und einen Radikalinitiator beinhaltet, dadurch gekennzeichnet, dass es sich um ein Mehrkomponentenkit, insbesondere ein Zweikomponentenkit mit einer Komponente (A), welche ein radikalisch härtbares Kunstharz beinhaltet, und mit einer Komponente (B), die einen Härter beinhaltet, handelt, wobei es sich bei dem Zweikomponentenkit vorzugsweise um eine Zweikammerkartusche, insbesondere mit Statikmischer, handelt.

Es hat sich überraschenderweise gezeigt, dass die vorstehend beschriebene Aufgabe durch eine Zweikomponenten-Mörtelmasse gemäß Anspruch 1 gelöst wird. Bevorzugte Ausführungsformen der erfindungsgemäßen Mörtelmasse sind in den Unteransprüchen angegeben, die wahlweise miteinander kombiniert werden können. Gegenstand der Erfindung ist ferner die Verwendung der Mörtelmasse zur chemischen Befestigung von Bauteilen wie Ankergewindestangen, Bewehrungseisen, Gewindehülsen und Schrauben in Bohrlöchern, die in mineralischem Untergrund, vorzugsweise Beton, vorliegen.

In ihrer allgemeinen Form umfasst die Erfindung eine Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, dadurch gekennzeichnet, dass die Harzkomponente (A) und/oder die Härterkomponente (B) als weitere Bestandteile mindestens CaO und mindestens einen zusätzlichen anorganischen Feststoff enthält, dadurch gekennzeichnet, dass die Gesamtmenge an anorganischen Feststoffen zuzüglich CaO in der Mörtelmasse 40 bis 75 Gew.-% beträgt, bezogen auf das Gesamtgewicht der Mörtelmasse, und das Gewichtsverhältnis des Gesamtgewichts von CaO in der Mörtelmasse zu dem Gesamtgewicht der zusätzlichen anorganischen Feststoffe in der Mörtelmasse mindestens 0,1 beträgt.

Die Befestigung von Bauteilen unter Verwendung der erfindungsgemäßen Zweikomponenten-Mörtelmasse ergibt bei sowohl trockenen, feuchten und/oder nassen Bohrlöchern hohe bzw. verbesserte Lastwerte. Dies wird erfindungsgemäß dadurch erreicht, dass ein Teil der herkömmlichen anorganischen Feststoffe in der Mörtelmasse durch CaO ersetzt wird.

Weitere Vorteile der Erfindung ergeben sich aus der folgenden Beschreibung bevorzugter Ausführungsformen.

Unter einer "*Zweikomponenten-Mörtelmasse"* wird im Sinne der Erfindung eine Mörtelmasse verstanden, die aus einer härtbaren Harzkomponente und einer Härterkomponente für die Harzkomponente besteht, wobei die Harzkomponente und die Härterkomponente getrennt voneinander gelagert werden, sodass während der Lagerung keine Umsetzung der Härterkomponente mit der Harzkomponente erfolgt. Durch Vermischen der Härterkomponente mit dem Reaktivharz unmittelbar vor der Anwendung der Mörtelmasse wird die Aushärtung des Reaktivharzes gestartet.

Der Begriff *"anorganischer Feststoff*" bezieht sich auf alle festen, anorganischen Bestandteile der Mörtelmasse, außer CaO.

Die Zweikomponenten-Mörtelmasse der vorliegenden Erfindung ist zum einen dadurch gekennzeichnet, dass die Harzkomponente (A) und/oder die Härterkomponente (B) als weitere Bestandteile mindestens CaO und mindestens einen zusätzlichen anorganischen Feststoff enthält, wobei die Gesamtmenge an anorganischen Feststoffen zuzüglich CaO in der Mörtelmasse 40 bis 75 Gew.-%, bezogen auf das Gesamtgewicht der Mörtelmasse, beträgt. In bevorzugten Ausführungsformen beträgt die Gesamtmenge an anorganischen Feststoffen zuzüglich CaO in der Mörtelmasse 45 bis 70 Gew.-%, stärker bevorzugt 50 bis 70 Gew.-%, bezogen auf das Gesamtgewicht der Mörtelmasse.

Die erfindungsgemäße Zweikomponenten-Mörtelmasse ferner dadurch gekennzeichnet, dass das Gewichtsverhältnis des Gesamtgewichts von CaO in der Mörtelmasse zu dem Gesamtgewicht der zusätzlichen anorganischen Feststoffe in der Mörtelmasse mindestens 0,1 beträgt. In bevorzugten Ausführungsformen beträgt das Gewichtsverhältnis des Gesamtgewichts von CaO in der Mörtelmasse zu dem Gesamtgewicht der zusätzlichen anorganischen Feststoffe in der Mörtelmasse mindestens 0,15, stärker bevorzugt mindestens 0,2.

Abgesehen von den vorstehend genannten Bedingungen ist die Menge des in der erfindungsgemäßen Mörtelmasse vorhandenen CaO ist nicht besonders beschränkt. Bereits kleine Mengen an CaO zeigen eine verbessernde Wirkung. Im Prinzip kann ein hoher Anteil der in Mörtelmassen üblichen anorganischen Feststoffen erfindungsgemäß durch CaO ersetzt werden. In einer Ausführungsform beträgt die Menge an CaO in der Mörtelmasse von 2 bis 30 Gew.-%, bezogen auf das Gesamtgewicht der erfindungsgemäßen Mörtelmasse. In einer bevorzugten Ausführungsform beträgt die Menge an CaO von 5 bis 25 Gew.-%, bevorzugt 10 bis 20 Gew.-%, bezogen auf das Gesamtgewicht der Mörtelmasse.

Die Mörtelmasse gemäß der vorliegenden Erfindung umfasst weiterhin in der Harzkomponente (A) und/oder der Härterkomponente (B) mindestens einen anorganischen Feststoff als weiteren Bestandteil. Die Verwendung von anorganischen Feststoffen in Mörtelmassen ist im Stand der Technik bekannt. Im Prinzip ist auch CaO ein anorganischer Stoff, wird jedoch gemäß der hier verwendeten Nomenklatur als wesentlicher Bestandteil der erfindungsgemäßen Mörtelmasse nicht als (herkömmlicher) anorganischer Feststoff bezeichnet. Die Gesamtmenge an anorganischen Feststoffen in der erfindungsgemäßen Mörtelmasse ergibt sich daher aus der Menge an CaO zusammen mit der Menge an anorganischem Feststoff.

Die erfindungsgemäße Mörtelmasse kann hohe Mengen an zusätzlichen anorganischen Feststoffen enthalten. Beispielsweise liegt die Menge an zusätzlichem anorganischem Feststoff in einem Bereich von 10 bis 73 Gew.-%, bezogen auf das Gesamtgewicht der Mörtelmasse. In einer bevorzugten Ausführungsform liegt die Menge an zusätzlichem anorganischem Feststoff in einem Bereich von 15 bis 65 Gew.-%, stärker bevorzugt 30 bis 60 Gew.-%, bezogen auf das Gesamtgewicht der Mörtelmasse.

Die anorganischen Feststoffe können beispielsweise aus anorganischen Füllstoffen, hydraulisch abbindenden oder polykondensierbaren anorganische Verbindungen, Modifikatoren und Mischungen davon ausgewählt sein.

Bevorzugt umfasst der anorganische Feststoff einen Füllstoff, der in der Harzkomponente (A) und/oder in der Härterkomponente (B) enthalten sein kann. Beispiele für geeignete Füllstoffe sind BaSO₄, Quarz, Glas, Korund, Porzellan, Steingut, Schwerspat, Leichtspat, Gips, Talkum, Flugasche und/oder Kreide sowie deren Mischungen, etwa in Form von Sanden, Mehlen oder Formkörpern, vorzugsweise in Form von Fasern oder Kugeln.

Gemäß einer weiter bevorzugten Ausführungsform der Erfindung umfasst der anorganische Feststoff ferner eine hydraulisch abbindende oder polykondensierbare anorganische Verbindung, wie Zement und/oder Gips, vorzugsweise Eisenoxid-freien oder Eisenoxid-armen Zement wie Aluminat-Zement. Die hydraulisch abbindende oder polykondensierbare anorganische Verbindung ist vorzugsweise in der Härterkomponente (A) enthalten. Die Härterkomponente (B) umfasst in diesem Fall neben dem Härtungsmittel und dem für die Phlegmatisierung des Härtungsmittels wahlweise enthaltenen Wassers noch zusätzliches Wasser für das Aushärten der hydraulisch abbindenden oder polykondensierbaren anorganischen Verbindung.

Schließlich kann der anorganische Feststoff in der Harzkomponente (A) und/oder in der Härterkomponente (B) noch weitere anorganische Modifikatoren wie Verdicker und Thixotropiermittel enthalten, beispielsweise gefällte oder pyrogene Kieselsäure, Bentonite und/oder Kaolin.

Zweikomponenten-Mörtelmasse der vorliegenden Erfindung umfasst weiterhin in der Harzkomponente (A) als härtbaren Bestandteil mindestens ein radikalisch härtbares Harz. Radikalisch härtbare Harze zur Verwendung in Mörtelmassen sind im Stand der Technik bekannt. Erfindungsgemäß geeignete radikalisch härtbare Harze umfassen beispielsweise ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättigter Polyester, die in der erfindungsgemäßen Zweikomponenten-Mörtelmasse verwendet werden können, werden in folgende Kategorien eingeteilt:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diese Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion eines Diacids, z.B. Maleinsäure, mit Dicyclopentadien, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt. In diesem Zusammenhang wird auf die Anmeldung US 2011/071234 verwiesen.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

Beispiele für derartige Epoxy(meth)acrylate sind solche der Formel (I) 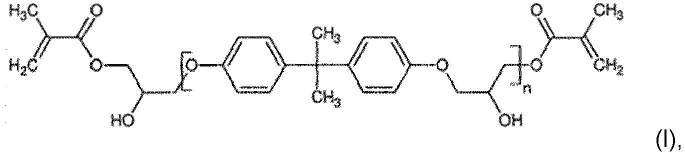 worin n für eine Zahl grösser oder gleich 1 steht (wenn Gemische verschiedener Moleküle mit unterschiedlichen n-Werten vorliegen und durch die Formel (I) repräsentiert werden, sind auch nicht-ganzzahlige Zahlen als Mittelwert möglich).

Weitere Beispiele für die propoxylierten oder insbesondere ethoxylierten aromatischen Diol-, wie Bisphenol-A-, Bisphenol-F- oder Novolak- (insbesondere di-)(meth)acrylate sind solche der Formel (II) 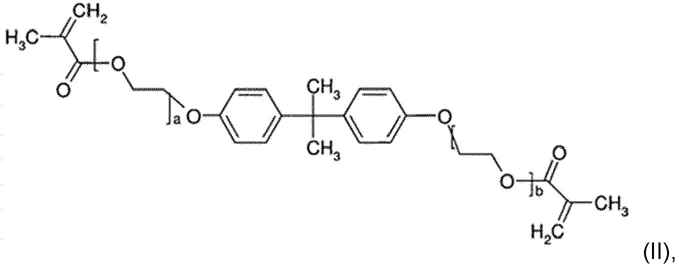 worin a und b jeweils unabhängig voneinander für eine Zahl grösser oder gleich 0 stehen mit der Maßgabe, dass vorzugsweise mindestens einer der Werte grösser als 0 ist, vorzugsweise beide 1 oder grösser sind (wenn Gemische verschiedener Moleküle mit unterschiedlichen (a und b)-Werten vorliegen und durch die Formel (II) repräsentiert werden, sind auch nicht-ganzzahlige Zahlen als Mittelwert möglich).

Ganz besonders geeignet sind die bekannten Reaktionsprodukte aus Di- oder Polyisocyanaten und Hydroxyalkylmethylacrylaten, wie sie beispielsweise in der DE 2 312 559 A1 beschrieben sind, Addukte aus (Di)Isocyanaten und 2,2-Propanbis-[3-(4-phenoxy)-1,2-hydroxypropan-1-methacrylat] nach der US PS 3 629 187 sowie die Addukte aus Isocyanaten und Methacryloylalkylethern, alkoxybenzolen bzw. alkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen. Selbstverständlich können auch Gemische aus geeigneten Monomeren verwendet werden.

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 (Itaconsäureester) beschrieben sind.

Der prozentuale Anteil (in Gew.-% der Harzkomponente) von radikalisch härtbarem Harz in der Harzkomponente (A) beträgt vorteilhafterweise mehr als etwa 5%, bevorzugt mehr als etwa 15%, und besonders bevorzugt mehr als etwa 20%. Der prozentuale Anteil (in Gew.-% der Harzkomponente) von radikalisch härtbaren Harz in der Harzkomponente beträgt vorteilhafterweise von etwa 10% bis etwa 90%, bevorzugt von etwa 15% bis etwa 80%, bevorzugter von etwa 20% bis etwa 60%, bevorzugter von etwa 25% bis etwa 55%, noch bevorzugter von etwa 30% bis etwa 55%, besonders bevorzugt von etwa 30% bis etwa 50% und ganz besonders bevorzugt von etwa 32% bis etwa 45%.

Das radikalisch härtbare Harz in der Komponente (A) der erfindungsgemäßen Mörtelmasse umfasst bevorzugt ein Urethan(meth)acrylatharz und/oder ein (meth)acrylatmodifiziertes Epoxidharz. In einer bevorzugten Ausführungsform ist das radikalisch härtbare Harz ein Urethan(meth)acrylatharz.

Zur Herstellung eines geeigneten Urethan(meth)acrylatharzes kann ein mindestens difunktionelles Isocyanat mit einer oder mehreren hydroxyfunktionellen, ethylenisch ungesättigten Verbindungen umgesetzt werden, insbesondere mit hydroxyfunktionellen (Meth)acrylverbindungen.

Das mindestens difunktionelle Isocyanat zur Herstellung des Urethan(meth)acrylatharzes kann ein aromatisches Isocyanat, ein aliphatisches Isocyanat, insbesondere ein cycloaliphatisches Isocyanat und ein Isocyanatgruppen enthaltendes Präpolymer sein, die auch im Gemisch miteinander eingesetzt werden können.

Beispiele für geeignete aliphatische und aromatische Isocyanate umfassen m-Phenylendiisocyanat, Toluylen-2-4-diisocyanat, Toluylen-2-6-diisocyanat, Hexamethylen-1,6-diisocyanat, Tetramethylen-1,4-diisocyanat, Cyclohexan-1,4-diisocyanat, Hexahydrotoluylendiisocyanat, Naphthylen-1,5-diisocyanat, Methoxyphenyl-2,4-diisocyanat, Diphenylmethan-4,4'-diisocyanat, 4,4'-biphenylendiisocyanat, 3,3'-Dimethoxy-4,4'-biphenyldiisocyanat, 3,3'-Dimethyl-4,4'-biphenyldiisocyanat, 3,3'-Dimethyldiphenylmethan-4,4'-diisocyanat, 4,4',4"-Triphenylmethantriisocyanat, Polymethylenpolyphenylisocyanat (PMDI), Toluylen-2,4,6-triisocyanat und 4,4'-Dimethyldiphenylmethan-2,2',5,5'-tetraisocyanat.

Diphenylmethan-4,4'-diisocyanat, Diphenylmethan-2,4'-diisocyanat und Mischungen davon werden gemeinsam als MDI bezeichnet, und alle können verwendet werden. Toluylen-2,4-diisocyanat, Toluylen-2,6-diisocyanat und Mischungen davon werden allgemein als TDI bezeichnet, und können ebenfalls alle verwendet werden.

Bevorzugt ist das Polyisocyanat aus der aus Diphenylmethandiisocyanat (MDI), polymerem Diphenylmethandiisocyanat (PMDI), Toluylendiisocyanat (TDI), Hexandiisocyanat (HDI), Isophorondiisocyanat (IPDI) und Mischungen davon bestehenden Gruppe ausgewählt.

Isocyanat-Präpolymere, die durch Reaktion eines stöchiometrischen Überschusses eines beliebigen Polyisocyanats mit einer isocyanatreaktiven Verbindung als Kettenverlängerer hergestellt werden, können ebenfalls verwendet werden, wahlweise im Gemisch mit den oben genannten aromatischen und aliphatischen Isocyanaten.

Beispiele für derartige Kettenverlängerer sind zweiwertige Alkohole wie Ethandiol, Diethylenglycol, Triethylenglycol und Polyethylenglycol, Propandiol, Dipropylenglycol, Tripropylenglycol und Polypropylenglycol, 1,4-Butandiol, 1,6-Hexandiol, Neopentylglycol und Diethanolamin, weiter aromatische Alkohole wie Bisphenol-A und Bisphenol-F oder deren Ethoxylierungsprodukte, Hydrierungsprodukte und/oder Halogenierungsprodukte, höherwertige Alkohole wie Glycerin, Trimethylolpropan, Hexantriol und Pentaerythrit, hydroxylgruppenhaltige Polyether wie beispielsweise Oligomere aliphatischer oder aromatischer Oxirane und/oder höherer cyclischer Ether, beispielsweise von Ethylenoxid, Propylenoxid, Styroloxid und Furan, Polyether, die in der Hauptkette aromatische Struktureinheiten enthalten, wie beispielsweise die Polyether des Bisphenol A und F, sowie hydroxylgruppenhaltige Polyester auf Basis der obengenannten Alkohole und Polyether mit Dicarbonsäuren oder ihrer Anhydride wie Adipinsäure, Phthalsäure, Tetra- oder Hexahydrophthalsäure, Hetsäure, Maleinsäure, Fumarsäure, Itaconsäure und Sebacinsäure.

Kettenverlängerer mit aromatischen Struktureinheiten dienen zur Kettenversteifung des Harzes. Hydroxylverbindungen mit ungesättigten Struktureinheiten wie Fumarsäure können zur Erhöhung der Vernetzungsdichte während der Aushärtung herangezogen werden. Verzweigte oder sternförmige Hydroxylverbindungen als Kettenverlängerer, insbesondere drei- und höherwertige Alkohole sowie Polyether und/oder Polyester, die deren Struktureinheiten enthalten, ergeben verzweigte oder sternförmige Urethan(meth)acrylate, die eine niedrigere Viskosität der Harze und eine verbesserte Löslichkeit in Reaktivverdünnern aufweisen.

Die hydroxyfunktionelle (Meth)acrylverbindung zur Herstellung des Urethan(meth)acrylatharzes der Harzkomponente (A) ist vorzugweise ein (Meth)acrylsäurehydroxyalkylester, wie Hydroxyethyl(meth)acrylat, Hydroxypropyl(meth)acrylat, Polyoxyethylen(meth)acrylat, Polyoxypropylen(meth)acrylat, oder ein hydroxylgruppenhaltiger (Meth)acrylsäureester von mehrwertigen Alkoholen wie Pentaerythrittri(meth)acrylat, Glycerol¬di(meth)acrylat, Trimethylol-propandi(meth)acrylat und Neopentylglycolmono(meth)acrylat.

Die hier und im Folgenden verwendete Bezeichnung "*(Meth)acryl...*" oder "*...(meth)acryl...*" bedeutet, dass von dieser Bezeichnung sowohl die Acrylgruppe als auch die Methacrylgruppe umfasst sein soll.

Die Umsetzung des mindestens difunktionellen Isocyanats mit der hydroxyfunktionellen, ethylenisch ungesättigten Verbindung erfolgt derart, dass das so erhaltene radikalisch härtbare Harz der Harzkomponente (A) im Wesentlichen frei von freien Isocyanatgruppen ist. Im Wesentlichen frei bedeutet hier, dass das Harz einen NCO-Gehalt von weniger als 2% aufweist, vorzugsweise weniger als 1% und besonders bevorzugt weniger als 0,3%. Dazu wird die hydroxyfunktionelle, ethylenisch ungesättigte Verbindung in einem stöchiometrischen Überschuss über die Isocyanatgruppen eingesetzt.

Als weitere radikalisch härtbare Harze können beispielsweise Vinylester, Epoxy(meth)acrylate, ungesättigte Polyesterharze und Mischungen davon eingesetzt werden, allein oder auch zusammen mit dem oben beschriebenen (Poly)urethan(meth)acrylat.

Ungesättigte Polyesterharze werden durch Umsetzung von ungesättigten Dicarbonsäuren wie o- und/oder iso-Phthalsäure, Maleinsäure und Fumarsäure mit Dialkoholen erhalten.

Als Epoxy(meth)acrylate werden üblicherweise Kondensate von (Meth)acylsäure mit Glycidylethern von Bisphenol-A, Bisphenol-F oder Novolaken eingesetzt.

Das radikalisch härtbare Harz liegt vorzugsweise in einem Anteil von 10 bis 40 Gewichtsprozent in der Mörtelmasse vor.

Gemäß einer bevorzugten Ausführungsform der Erfindung enthält die Harzkomponente (A) in allen oben beschriebenen Ausführungsformen als weiteren Bestandteil mindestens einen Reaktivverdünner, der wenigstens eine ethylenisch ungesättigte Gruppe aufweist. Geeignete Reaktivverdünner sind insbesondere (Meth)acrylatverbindungen sowie Allyl- und Vinylverbindungen.

Geeignete Reaktivverdünner sind in der EP 1 935 860 A1 und der DE 195 31 649 A1 beschrieben. Vorzugsweise enthält die Harzmischung als Reaktivverdünner einen (Meth)acrylsäureester, wobei besonders bevorzugt aliphatische oder aromatische C₅-C₁₅ (Meth)acrylate ausgewählt werden. Geeignete Beispiele umfassen: Hydroxypropyl(meth)acrylat, 1,2-Ethandioldi-(meth)acrylat, 1,3-Propandioldi(meth)acrylat, 1,2-Butandioldi(meth)acrylat, 1,4-Butandioldi(meth)acrylat (BBDMA), Trimethylolpropantri(meth)acrylat, Phenethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.2.6-decan, Dicyclopentenyloxyethylcrotonat, 3-(Meth)acryloyl-oxymethyl-tricylo-5.2.1.0.2.6-decan, 3-(Meth)cyclo-pentadienyl(meth)acrylat, Isobornyl(meth)acrylat und Decalyl-2-(meth)acrylat; PEG-di(meth)acrylate, wie PEG200-di(meth)acrylat, Tetraethylenglykol-di(meth)acrylat, Solketal(meth)acrylat, Cyclohexyl(meth)acrylat, Phenoxyethyl-di(meth)acrylat, Methoxyethyl(meth)acrylat, Tetrahydrofurfuryl(meth)acrylat, tert-Butyl(meth)acrylat und Norbornyl(meth)acrylat.

Grundsätzlich können auch andere übliche, radikalisch härtbare Verbindungen, allein oder im Gemisch mit den (Meth)acrylsäureestern, eingesetzt werden, z. B. Styrol, α-Methylstyrol, alkylierte Styrole, wie tert-Butylstyrol, Divinylbenzol und Allylverbindungen, wobei die nicht kennzeichnungspflichtigen Vertreter davon bevorzugt sind.

Besonders bevorzugte Reaktivverdünner sind Hydroxypropyl(meth)acrylat, 1,4-Butandioldi(meth)acrylat und Butandiol-1,2-di(meth)acrylat.

Der Reaktionsverdünner dient zum einen als Lösungsmittel für das radikalisch härtbare Harz und zum anderen als ein Comonomer, das an der radikalischen Polymerisation der Harzkomponente teilnimmt. Die Verwendung von Reaktionsverdünnern führt zu einer weiteren Verbesserung der Haftung der ausgehärteten Mörtelmasse an den Oberflächen des mineralischen Untergrunds und/oder des zu befestigenden Bauteils.

Der Reaktivverdünner liegt in der Mörtelmasse bevorzugt in einem Anteil von 0 bis 25 Gewichtsprozent vor, weiter bevorzugt von 4 bis 25 Gewichtsprozent und besonders bevorzugt von 8 bis 15 Gewichtsprozent. Alle radikalisch härtbaren Verbindungen liegen in der Mörtelmasse bevorzugt in einem Anteil von bis zu höchstens 30 Gewichtsprozent vor.

Gemäß einer weiter bevorzugten Ausführungsform der Erfindung enthält die Harzkomponente (A) wenigstens einen Beschleuniger für das Härtungsmittel. Geeignete Beschleuniger, die gewöhnlich der Harzmischung zugegeben werden, sind dem Fachmann bekannt. Diese sind beispielsweise Amine, bevorzugt tertiäre Amine und/oder Metallsalze.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylamino-propionsäurenitril, 6-Aminohexansäure, 11-Aminoundecansäure, 6-Amino-hexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydropxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Geeignete Metallsalze sind zum Beispiel Cobaltoctoat oder Cobaltnaphthenoat sowie Vanadium-, Kalium-, Kalzium-, Kupfer-, Mangan- oder Zirkoniumcarboxylate.

Die Harzmischung kann ferner einen Co-Beschleuniger enthalten, insbesondere, wenn eine Übergangsmetallverbindung als Beschleuniger verwendet wird. Abhängig von der gewählten Übergangsmetallverbindung ist der Fachmann in der Lage, einen geeigneten Co-Beschleuniger auszuwählen, um die gewünschten Aushärteeigenschaften zu erreichen. Wird eine Kobaltverbindung als Beschleuniger verwendet, ist der Co-Beschleuniger bevorzugt ein Amin und/oder eine 1,3-Dioxoverbindung. Wird eine Kupferverbindung als Beschleuniger verwendet, ist der Co-Beschleuniger bevorzugt ein Amin, ein Acetoacetamid, ein Kaliumsalz, ein Imidazol und/oder ein Gallat oder Gemische davon. Wird eine Manganverbindung als Beschleuniger verwendet, ist der Co-Beschleuniger bevorzugt eine 1,3-Dioxoverbindung, ein Thiol und/oder ein Kalium- oder Lithiumsalz oder Gemische davon. Wird eine Eisenverbindung als Beschleuniger verwendet, ist der Co-Beschleuniger bevorzugt eine 1,3-Dioxoverbindung und/oder ein Thiol, bevorzugt in Kombination mit einem Alkalimetallsalz. Geeignete 1,3-Dioxoverbindungen sind Acetylaceton, Acetoacetate und Acetoacetamide.

Die Beschleuniger und/oder Co-Beschleuniger sind vorzugsweise in einem Anteil von 0 bis 1 Gewichtsprozent, bevorzugt 0,01-0,7 Gew.-%, in der Mörtelmasse enthalten.

Weiterhin kann die Harzkomponente (A) einen oder mehrere der üblichen Polymerisationsinhibitoren zur Stabilisierung der Harzmischungen gegen vorzeitige Polymerisation und zur Einstellung der Gelzeit enthalten, vorzugsweisen in einem Anteil von 0 bis 0,2 Gewichtsprozent, bezogen auf das Gesamtgewicht der Mörtelmasse. Als Polymerisationsinhibitoren sind die für radikalisch härtbare Verbindungen üblicherweise verwendeten Polymerisationsinhibitoren geeignet, wie sie dem Fachmann bekannt sind. Beispiele für derartige Polymerisationsinhibitoren sind insbesondere Hydrochinon, substituierte Hydrochinone, z.B. 4-Methoxyphenol, Phenothiazin, Benzochinon oder tert-Butylbrenzkatechin, wie sie beispielsweise in der EP 1935860 A1 oder EP 0965619 A1 beschrieben werden, Nitroxylverbindungen, insbesondere stabile Nitroxylradikale, auch N-Oxyl-Radikale genannt, wie Piperidinyl-N-oxyl oder Tetrahydropyrrol-N-oxyl, wie sie in der DE 19531649 A1 beschrieben sind. Besonders bevorzugt wird 4-Hydroxy-2,2,6,6-tetramethylpiperidin-N-oxyl (im Folgenden als Tempol bezeichnet) zur Stabilisierung verwendet.

Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Polymerisationsinhibitoren, die oft Bestandteil von kommerziellen radikalisch härtenden Reaktionsharzen sind, kommen Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachlor-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und N-Oxyl-Radikale in Betracht.

Geeignete stabile N-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden, wie sie in der DE199 56 509 beschrieben sind. Ferner sind geeignete N-Oxylverbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen. Ferner können in para-Position zur Hydroxylgruppe substituierte Pyrimidinol- oder Pyridinol-Verbindungen als Polymerisationsinhibitoren verwendet werden, wie sie in der DE 10 2011 077 248 B1 beschrieben sind.

Die Polymerisationsinhibitoren können, abhängig von den gewünschten Eigenschaften und der Verwendung der Harzmischung, entweder allein oder als Kombination von zweien oder mehreren davon verwendet werden. Die Kombination der phenolischen und der nicht-phenolischen Polymerisationsinhibitoren ermöglicht dabei einen synergistischen Effekt, wie auch die Einstellung einer im Wesentlichen driftfreien Einstellung der Gelierzeit der Reaktionsharzformulierung zeigt.

Schließlich kann die Mörtelmasse noch weitere organische Zusätze wie Haftverbesserer auf der Grundlage von Silanverbindungen enthalten, wie sie dem Fachmann beispielsweise aus der EP 2 371 782 A2 und der WO 2011/072789 A1 bekannt sind.

Das in der Härterkomponente (B) der erfindungsgemäßen Zweikomponenten-Mörtelmasse enthaltene Härtungsmittel für das radikalisch härtbare Harz der Harzkomponente (A) umfasst, vorzugsweise mindestens ein organisches Peroxid, beispielsweise Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat.

Die organischen Peroxide sind vorzugsweise phlegmatisiert, insbesondere durch Zusatz von Wasser als Phlegmatisierungsmittel und/oder Lösungsmittel. Geeignete Härterkomponenten sind dem Fachmann bekannt und auf dem Markt erhältlich.

Alternativ kann für die Härtung ein Härtersystem verwendet werden, welches peroxidfrei ist und die Bestandteile
- mindestens eine Manganverbindung als Beschleuniger und
- eine 1 ,3-Dioxoverbindung als Initiator
beinhaltet. Hierzu wird auf die DE 10 2011 078 785 A1 verwiesen.

Ebenfalls alternativ kann für die Härtung ein Härtersystem verwendet werden, welches die Bestandteile:
- als Beschleuniger mindestens ein Metallsalz und
- als Initiator mindestens eine Thiol- und/oder Thiolester-Gruppen beinhaltende Verbindung,
beinhaltet. Hierzu wird auf die DE 10 2013 114 061 A1 verwiesen.

Durch die Kombination bzw. das Mischen der beiden Bestandteile können Radikale gebildet werden, welche anstelle von bisher üblichen Radikalbildnern eine Polymerisation von nichtaromatischen Doppelbindungen, z.B. olefinischen Doppelbindungen, beispielsweise Acrylaten oder Methacrylaten, auslösen können.

Als weitere Alternative kann für die Härtung ein Härtersystem verwendet werden, welches die folgenden Bestandteile beinhaltet:
- als Beschleuniger mindestens ein Metallsalz und
- als Initiator mindestens eine CH-acide Verbindung der Formel 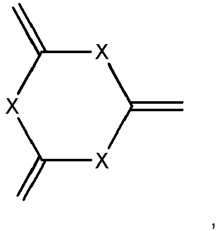
worin
(i)
   -A- für -C(R¹)(R²)- steht,
   -X- für eine Bindung, für -NR³- oder für -(CR⁴R⁵)ₚ- steht, oder für -O- steht, Y für NR⁶ oder für (CR⁷R⁸)_{q} steht, oder für O steht,
   wobei wenn X für O steht auch Y für O steht;
   wobei vorzugsweise X für (CR⁴R⁵)ₚ steht und Y für CR⁷R⁸ steht,
   oder X für NR³ und Y für NR⁶ steht;
   Z¹ für O, S, S=O oder S(=O)₂ steht,
   Z² für O, S, S=O oder S(=O)₂ steht,
   Z³ für O, S, S=O oder S(=O)₂ oder für R⁹ und R¹⁰ steht,
   p für 1, 2 oder 3 steht, vorzugsweise für 1 oder 2
   q für 1, 2 oder 3 steht, vorzugsweise für 1;
   und die Reste R¹, R², R³, R⁴, R⁵, R⁶, R⁷, R⁸, R⁹ und R¹⁰ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome (anstelle von C-Atomen;
   vorzugsweise ausgewählt aus O, N, wie NH oder N-Alkyl, und S aufweisen, mit der Maßgabe, dass mindestens einer der Reste R¹ und R² Wasserstoff bedeutet,
   oder
(ii) offenkettige Verbindungen,
   worin das die Brücke bildende Glied -C(=Z³)- fehlt,
   -A- für -C(R¹)(R²)- steht, X und Y unabhängig voneinander für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder vorzugsweise für eine jeweils unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkoxycarbonylmethylgruppe oder C₁-C₄-Alkylcarbonylmethylgruppe stehen,
   R¹ und R² beide Wasserstoff bedeuten und
   Z¹ und Z² die genannten Bedeutungen haben;
   oder X für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder C₁-C₄-Alkoxycarbonylmethylgruppe oder C₁-C₄-Alkylcarbonylmethylgruppe steht,
   Y und Z² gemeinsam mit dem bindenden Kohlenstoffatom -CN bedeuten,
   Z¹ die oben genannten Bedeutungen hat, und
   R¹ und R² jeweils wie oben definiert sind mit der Maßgabe, dass mindestens einer der Reste Wasserstoff bedeutet;
   und/oder Salze davon. Hierzu wird auf die DE 10 2015 003 221 A1 verwiesen.

Bei den als Beschleuniger in Form eines Metallsalzes, was auch Metallkomplexe und Metalloxide einschließt, verwendeten Komponenten handelt es sich in beiden Fällen vorzugsweise um ein oder mehrere Metallsalze oder insbesondere um Salze von organischen und/oder anorganischen Säuren mit Metallen, z.B. ausgewählt aus Kobalt, Zirkonium, Zink, Cer, Zinn, Wismut oder vorzugsweise Vanadium, Mangan, Kupfer oder Eisen, oder Gemischen von zwei oder mehr davon, wobei die organischen Säuren vorzugsweise gesättigt sind, wobei Vanadium und Eisen oder insbesondere Mangan und Kupfer, ggf. in Gegenwart eines oder zweier Co-Beschleuniger mit Metallanteil aus der Gruppe der oben genannten Metalle, bevorzugt ist, insbesondere in Form von Salzen oder Komplexen mit anorganischen Säuren und/oder Carboxylatresten, wie Carboxylaten mit CH₃, C₂-C₂₀-Alkyl, einem C₆-C₂₄-Arylrest oder C₇-C₃₀-Aralkylrest, beispielsweise Oktoat, z.B. 2-Ethylhexanoat (Isooctanoat), ferner Neodecanoat, oder Acetylacetonat. Besonders bevorzugt sind Mangancarbonat oder -carboxylate, wie Mn-acetat oder Mnoctoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat und Kupferchlorid umfasst.

In einer weiteren Alternative kann für die Härtung ein Härtersystem verwendet werden, welches die folgenden Bestandteile
- als Beschleuniger mindestens ein Metallsalz und
- als Initiator mindestens ein Aldehyd und/oder Keton und mindestens ein primäres Amin, und/oder
- b2) mindestens ein Imin, welches ein oder mehrere Imin-Strukturinkremente der Formel 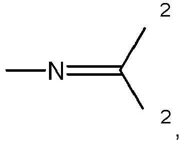
beinhaltet, worin unabhängig voneinander:
Q den organischen Rest des (jeweils) verwendeten Amins darstellt, oder für Wasserstoff steht; und
R² und R³ unabhängig voneinander Wasserstoff und/oder einen unsubstituierten oder substituierten, gegebenenfalls Doppelbindungen und/oder Heteroatome aufweisenden, ein- oder mehrfach verzweigten oder geradkettigen organischen Rest, welcher mindestens eine aliphatische, heteroaliphatische, alicyclische oder heterocyclische Molekülstruktur, oder eine Kombination von zwei oder mehr der vorgenannten Molekülstrukturen beinhaltet, bedeutet;
und/oder Salze davon,
beinhaltet. Hierzu wird auf die DE 10 2016 124 075 A1 verwiesen.

Zur Einstellung einer geeigneten Viskosität kann die Härterkomponente einen Anteil an anorganischen Füllstoffen und Modifikatoren wie Thixotropiermittel enthalten.

Die erfindungsgemäße Zweikomponenten-Mörtelmasse liegt vorzugsweise in Patronen, Kartuschen oder Folienbeuteln vor, die dadurch gekennzeichnet sind, dass sie zwei oder mehrere voneinander getrennte Kammern umfassen, in welchen die Harzkomponente (A) und die Härterkomponente (B) der Mörtelmasse reaktionsinhibierend voneinander getrennt angeordnet sind.

Die erfindungsgemäßen Zweikomponenten-Mörtelmassen können vorteilhaft die nachfolgende Gesamtzusammensetzung aus Harzkomponente (A) und Härterkomponente (B) aufweisen: radikalisch härtbares Harz in einem Anteil von 4,5 bis 28,5 Gew.-%; Reaktivverdünner in einem Anteil von 0 bis 25 Gew.-%; organisches Peroxid in einem Anteil von 0,5 bis 5 Gew.-%; Polymerisationsbeschleuniger in einem Anteil von 0 bis 1,0 Gew.-%; Polymerisationsinhibitoren in einem Anteil von 0 bis 0,2 Gew.-%; CaO in einem Anteil von 2 bis 30 Gew.-%; zusätzliche anorganische Feststoffe in einem Anteil von 10 bis 73 Gew.-%; und Wasser in einem Anteil von 1 bis 10 Gew.-%, wobei die Summe aller Anteile 100 Gewichtsprozent ergibt, und wobei das Gewichtsverhältnis von CaO zu den zusätzlichen anorganischen Feststoffen mindestens 0,1 beträgt.

Bevorzugt ist die erfindungsgemäße Mörtelmasse zusammengesetzt aus:
dem radikalisch härtbaren Harz in einem Anteil von 4,5 bis 28,5 Gew.-%;
wenigstens einem Reaktivverdünner in einem Anteil von 0 bis 25 Gew.-%;
einem organischen Peroxid in einem Anteil von 0,5 bis 5 Gew.-%;
einem Beschleuniger in einem Anteil von 0 bis 1,0 Gew.-%;
einem Polymerisationsinhibitor in einem Anteil von 0 bis 0,2 Gew.-%;
CaO in einem Anteil von 5 bis 25 Gew.-%;
einem zusätzlichen anorganischen Feststoff in einem Anteil von 15 bis 65 Gew.-%; und
Wasser in einem Anteil von 1 bis 10 Gew.-%;
wobei die Summe aller Anteile 100 Gewichtsprozent ergibt, und wobei das Gewichtsverhältnis von CaO zu den zusätzlichen anorganischen Feststoffen mindestens 0,1 beträgt.

Zur bestimmungsgemäßen Anwendung werden die Harzkomponente (A) und die Härterkomponente (B) aus den getrennten Kammern entleert und in einer geeigneten Vorrichtung, beispielsweise einem Statikmischer, gemischt. Die Mischung aus Harzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Das Härtungsmittel der Härterkomponente (B) initiiert die radikalische Polymerisation der Harzkomponente (A), sodass die Mörtelmasse unter Umgebungsbedingungen innerhalb weniger Stunden aushärtet.

Gegenstand der Erfindung ist daher auch die Verwendung der erfindungsgemäßen Zweikomponenten-Mörtelmasse zur chemischen Befestigung von Bauteilen, insbesondere Ankergewindestangen, Bewehrungseisen, Gewindehülsen und Schrauben, in Bohrlöchern, die in einem mineralischen Untergrund, vorzugsweise Beton, vorliegen.

Die Erfindung wird nachfolgend anhand von bevorzugten Ausführungsbeispielen beschrieben, die jedoch keiner Weise einschränkend zu verstehen sind.

### Beispiele:

### Herstellung von Komponenten

In einem Plastikeimer wurden die flüssigen Bestandteile gemäß den nachstehenden Tabellen mit einem Holzspatel vermischt. Dann wurden Füllstoffe und Verdicker zugegeben und von Hand vorgemischt, bevor es weiter in einen Dissolver (PC Laborsystem, Volumen 1L) während 8,5 Minuten unter 80 mbar Unterdruck bei 3500 U/min gemischt wurde.

Die Zusammensetzung der im nachstehenden Vergleichsbeispiel V1 sowie dem Anwendungsbeispiel A1 verwendeten Harz-Komponente ist in der folgenden Tabelle 1 dargestellt.

**Tabelle1:**

| **Harz-Komponente** | | [Gew.-%] |
|---|---|---|
| Urethan methacrylatharz | UMA121 | 37,7 |
| Reaktivverdünner | BDDMA | 40,15 |
| Reaktivverdünner | HPMA | 20,0 |
| Beschleuniger | DiPpT | 1,7 |
| Inhibitor | Tempol | 0,45 |

Die nachstehende Tabelle 2 zeigt die Zusammensetzung des Vergleichsbeispiels V1 und des Anwendungsbeispiels A1 in Gew.-%.

**Tabelle 2:**

| **Bestandteile** | | **V1** | **A1** |
|---|---|---|---|
| **A-Komponente** | | | |
| Harz-Komponente | | 40 | |
| Kieselsäure | TS 720 | 3,5 | |
| Quarzsand | F32 | 41,5 | |
| Zement | Ternal w | 15 | 0 |
| CaO | Nekafin 2 | 0 | 15 |

| **B-Komponente** | | | |
|---|---|---|---|
| Dibenzoylperoxid | BP40SAQ | 30,2 | |
| Wasser | | 4,6 | |
| KH₂PO₄ | | 0,2 | |
| Kieselsäure | Aerosil 200 | 1 | |
| Quarzmehl | Millisil W6 | 44 | |
| Bariumsulfat | Blanc fixe N | 20 | |

### Bestimmung von Verbundspannungen R1, B7 & B8:

Zur Bestimmung der mit den Mörtelmassen erzielten Verbundspannungen wurde eine hochfeste Ankergewindestange M12 verwendet, die in ein hammergebohrtes Bohrloch mit einem Durchmesser von 14 mm und einer Bohrlochtiefe von 60 mm mit der erfindungsgemäßen Zweikomponenten-Mörtelmasse in C20/25 Betonplatten eingedübelt wurde. Zur Bestimmung der Verbundspannung wurde nach einer Aushärtezeit von 24 h bei einer Temperatur von 23°C die Versagenslast durch zentrisches Ausziehen der Ankergewindestange mit enger Abstützung ermittelt. Die mittlere Versagenslast wurde anhand der Ergebnisse von fünf Ankern bestimmt.

### Reinigung von Bohrloch:

R1 (Referenz Bohrloch): Das im trockenen C20/25 Beton hergestellte Bohrloch wird mittels Druckluft und Bürste wie folgt gereinigt: 2x Druckluft 6 bar, 2x gebürstet und 2x Druckluft 6 bar.

B7: Das im Wasser gesättigtem C20/25 Beton hergestellte Bohrloch wird mittels Staubsauger (vac) und Bürste (brush) wie folgt gereinigt: 1xvac/1xbrush/1xvac (VAC = Saugen).

B8: Das im Wasser gesättigtem C20/25 Beton hergestellte Bohrloch wird wie folgt gereinigt: 1xvac/1xbrush/1xvac. In diesem Fall wird das Bohrloch nach der Reinigung mit Wasser gefüllt. Die Ankergewindestange wird mit Hilfe eines Stauzapfen zwischen 30 Minuten bis eine Stunde mit der erfindungsgemäßen Zweikomponenten-Mörtelmasse eingedübelt.

Die im Vergleichsbeispiel V1 und dem Anwendungsbeispiel A1 erhaltenen Verbundspannungen sind in Tabelle 3 gezeigt.

**Tabelle 3:**

| | **V1** | **A1** |
|---|---|---|
| Volumenmischungsverhältnis A:B | 5:1 | |
| Aushärtedauer in h | 24.0 | |
| Verbundspannung R1 in N/mm² | 29,8 | 35,4 |
| Verbundspannung B7 in N/mm² | 18,7 | 28,0 |
| Verbundspannung B8 in N/mm² | 16,0 | 25,0 |

Vergleichsbeispiel V1 hat zu niedrige Verbundspannungen unter R1, B7 und B8 Konditionen. Beispiel A1 zeigt deutlich, dass sich die Verbundspannungen unter R1, B7 und B8 Konditionen durch Zugabe von Calciumoxid signifikant erhöhen. Dabei sind die unter feuchten Bedingungen erzielten Verbesserungen (B7 and B8) besonders deutlich.

### Verwendete Komponenten:

| UMA121 | HILTI/DE |
|---|---|
| BDDMA | Evonik Performance Materials GmbH/DE |
| HPMA | Evonik Performance Materials GmbH/DE |
| DiPpT | Saltigo GMBH, Leverkusen/DE |
| Tempol | Evonik Performance Materials GmbH/DE |
| TS 720 | Cabot/Schweiz |
| Ternal w | Kerneos As/Frankreich |
| F32 | Quarzwerke Frechen/DE |
| Nekafin 2 | Kalkfabrik Netstal AG CH-8754 Netstal/Switzerland |
| BP40SAQ | United Initiators GmbH & Co. KG/DE |
| KH₂PO₄ | MERK KGaA |
| Aerosil 200 | Evonik Resource Efficiency GmbH/DE |
| Millisil W6 | Quarzwerke Frechen/DE |
| Blanc fixe N | Sachtleben Chemie GmbH/DE |

## Patentansprüche

1. Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, **dadurch gekennzeichnet, dass** die Harzkomponente (A) und/oder die Härterkomponente (B) als weitere Bestandteile mindestens CaO und mindestens einen zusätzlichen anorganischen Feststoff enthält, ***dadurch gekennzeichnet, dass*** die Gesamtmenge an anorganischen Feststoffen zuzüglich CaO in der Mörtelmasse 40 bis 75 Gew.-% beträgt, bezogen auf das Gesamtgewicht der Mörtelmasse, und das Gewichtsverhältnis des Gesamtgewichts von CaO in der Mörtelmasse zu dem Gesamtgewicht der zusätzlichen anorganischen Feststoffe in der Mörtelmasse mindestens 0,1 beträgt.

2. Mörtelmasse gemäß Anspruch 1, wobei die Gesamtmenge an anorganischen Feststoffen zuzüglich CaO in der Mörtelmasse 45 bis 70 Gew.-% vorzugsweise 50 bis 70 Gew.-%, bezogen auf das Gesamtgewicht der Mörtelmasse, beträgt.

3. Mörtelmasse gemäß Anspruch 1 oder 2, wobei das Gewichtsverhältnis des Gesamtgewichts von CaO in der Mörtelmasse zu dem Gesamtgewicht der zusätzlichen anorganischen Feststoffe in der Mörtelmasse mindestens 0,15, vorzugsweise mindestens 0,2 beträgt.

4. Mörtelmasse gemäß einem der vorangehenden Ansprüche, wobei das CaO in einem Anteil von 2 bis 30 Gew.-%, vorzugsweise 5 bis 25 Gew.-%, stärker bevorzugt 10 bis 20 Gew.-%, bezogen auf das Gesamtgewicht der Mörtelmasse, vorliegt.

5. Mörtelmasse gemäß einem der vorangehenden Ansprüche, wobei der zusätzliche anorganische Feststoff, ausgewählt ist aus anorganischen Füllstoffen, hydraulisch abbindenden oder polykondensierbaren anorganische Verbindungen, Modifikatoren und Mischungen davon.

6. Mörtelmasse gemäß Anspruch 5, wobei der zusätzliche anorganische Feststoff in einem Anteil von 10 bis 73 Gew.-%, vorzugsweise 15 bis 65 Gew.-%, stärker bevorzugt 30 bis 60 Gew.-%, bezogen auf das Gesamtgewicht der Mörtelmasse, vorliegt.

7. Mörtelmasse gemäß einem der vorangehenden Ansprüche, wobei der zusätzliche anorganische Feststoff einen Füllstoff umfasst, ausgewählt aus BaSO₄, Quarz, Glas, Korund, Porzellan, Steingut, Schwerspat, Leichtspat, Gips, Talkum, Flugasche, Kreide sowie deren Mischungen.

8. Mörtelmasse gemäß einem der vorangehenden Ansprüche, wobei der zusätzliche anorganische Feststoff eine hydraulisch abbindende oder polykondensierbare anorganische Verbindung umfasst, die aus der aus Zement und Gips sowie Mischungen davon bestehenden Gruppe ausgewählt ist, vorzugsweise ein Aluminat-Zement ist.

9. Mörtelmasse gemäß einem der vorangehenden Ansprüche, wobei der zusätzliche anorganische Feststoff einen Modifikator umfasst, der aus der aus Verdickern, Thixotropiermittel und Mischungen davon bestehenden Gruppe ausgewählt ist, bevorzugt gefällte oder pyrogene Kieselsäure, Bentonite und/oder Kaolin.

10. Mörtelmasse gemäß einem der vorangehenden Ansprüche, wobei das radikalisch härtbare Harz ausgewählt ist aus Verbindungen auf Urethan(meth)acrylatbasis, Verbindungen auf Epoxy(meth)acrylatbasis, Methacrylaten von alkoxylierten Bisphenolen, und Verbindungen auf Basis weiterer ethylenisch ungesättigter Verbindungen, wobei das radikalisch härtbare Harz vorzugsweise ausgewählt ist aus Verbindungen auf Urethan(meth)acrylatbasis, Verbindungen auf Epoxy(meth)acrylatbasis und Methacrylaten von alkoxylierten Bisphenolen, und wobei stärker bevorzugt das radikalisch härtbare Harz ein Urethan(meth)acrylatharz umfasst.

11. Mörtelmasse gemäß einem der vorangehenden Ansprüche, wobei die Harzkomponente (A) als weiteren Bestandteil mindestens einen Reaktivverdünner enthält.

12. Mörtelmasse gemäß einem der vorangehenden Ansprüche, wobei die Harzkomponente (A) als weiteren Bestandteil mindestens einen Beschleuniger umfasst.

13. Mörtelmasse gemäß einem der vorangehenden Ansprüche, wobei die Härterkomponente (B) als Härtungsmittel mindestens ein organisches Peroxid, insbesondere Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat enthält.

14. Mörtelmasse gemäß einem der vorangehenden Ansprüche, wobei die Mörtelmasse zusammengesetzt ist aus:
dem radikalisch härtbaren Harz in einem Anteil von 4,5 bis 28,5 Gew.-%;
wenigstens einem Reaktivverdünner in einem Anteil von 0 bis 25 Gew.-%;
einem organischen Peroxid in einem Anteil von 0,5 bis 5 Gew.-%;
einem Beschleuniger in einem Anteil von 0 bis 1,0 Gew.-%;
einem Polymerisationsinhibitor in einem Anteil von 0 bis 0,2 Gew.-%;
CaO in einem Anteil von 5 bis 25 Gew.-%;
einem zusätzlichen anorganischen Feststoff in einem Anteil von 15 bis 65 Gew.-%; und
Wasser in einem Anteil von 1 bis 10 Gew.-%;
wobei die Summe aller Anteile 100 Gewichtsprozent ergibt, und wobei das Gewichtsverhältnis von CaO zu den zusätzlichen anorganischen Feststoffen mindestens 0,1 beträgt.

15. Mörtelmasse gemäß einem der vorangehenden Ansprüche, wobei die Mörtelmasse in einer Patrone, einer Kartusche oder einem Folienbeutel vorliegt, und wobei die Harzkomponente (A) und die Härterkomponente (B) in voneinander getrennten Kammern angeordnet sind.

16. Verwendung der Zweikomponenten-Mörtelmasse nach einem der vorhergehenden Ansprüche zur chemischen Befestigung von Bauteilen wie Ankergewindestangen, Bewehrungseisen, Gewindehülsen und Schrauben, in Bohrlöchern, die in einem mineralischen Untergrund vorliegen.

## Claims

1. Two-component mortar composition comprising a resin component (A) which contains at least one radically curable resin as a curable constituent, and a hardener component (B) which contains a curing agent for the radically curable resin of the resin component (A), **characterized in that** the resin component (A) and/or the hardener component (B) contains at least CaO and at least one additional inorganic solid as further constituents, ***characterized in that*** the total amount of inorganic solids plus CaO in the mortar composition is 40 to 75 wt.%, based on the total weight of the mortar composition, and the weight ratio of the total weight of CaO in the mortar composition to the total weight of the additional inorganic solids in the mortar composition is at least 0.1.

2. Mortar composition according to claim 1, wherein the total amount of inorganic solids plus CaO in the mortar composition is 45 to 70 wt.%, preferably 50 to 70 wt.%, based on the total weight of the mortar composition.

3. Mortar composition according to either claim 1 or claim 2, wherein the weight ratio of the total weight of CaO in the mortar composition to the total weight of the additional inorganic solids in the mortar composition is at least 0.15, preferably at least 0.2.

4. Mortar composition according to any of the preceding claims, wherein the CaO is present in a proportion of 2 to 30 wt.%, preferably 5 to 25 wt.%, more preferably 10 to 20 wt.%, based on the total weight of the mortar composition.

5. Mortar composition according to any of the preceding claims, wherein the additional inorganic solid is selected from inorganic fillers, hydraulically setting or polycondensable inorganic compounds, modifiers and mixtures thereof.

6. Mortar composition according to claim 5, wherein the additional inorganic solid is present in a proportion of 10 to 73 wt.%, preferably 15 to 65 wt.%, more preferably 30 to 60 wt.%, based on the total weight of the mortar composition.

7. Mortar composition according to any of the preceding claims, wherein the additional inorganic solid comprises a filler selected from BaSO₄, quartz, glass, corundum, porcelain, earthenware, barite, light spar, gypsum, talc, fly ash, chalk and mixtures thereof.

8. Mortar composition according to any of the preceding claims, wherein the additional inorganic solid comprises a hydraulically setting or polycondensable inorganic compound selected from the group consisting of cement and gypsum and mixtures thereof, preferably an aluminate cement.

9. Mortar composition according to any of the preceding claims, wherein the additional inorganic compound comprises a modifier selected from the group consisting of thickeners, thixotropic agents and mixtures thereof, preferably precipitated or fumed silica, bentonites and/or kaolin.

10. Mortar composition according to any of the preceding claims, wherein the radically curable resin is selected from compounds based on urethane (meth)acrylate, compounds based on epoxy (meth)acrylate, methacrylates of alkoxylated bisphenols, and compounds based on further ethylenically unsaturated compounds, wherein the radically curable resin is preferably selected from compounds based on urethane (meth)acrylate, compounds based on epoxy (meth)acrylate, and methacrylates of alkoxylated bisphenols, and wherein more preferably the radically curable resin comprises a urethane (meth)acrylate resin.

11. Mortar composition according to any of the preceding claims, wherein the resin component (A) contains at least one reactive diluent as a further constituent.

12. Mortar composition according to any of the preceding claims, wherein the resin component (A) comprises at least one accelerator as a further constituent.

13. Mortar composition according to any of the preceding claims, wherein the hardener component (B) contains at least one organic peroxide, in particular dibenzoyl peroxide, methyl ethyl ketone peroxide, tert-butyl perbenzoate, cyclohexanone peroxide, lauryl peroxide, cumene hydroperoxide and/or tert-butyl peroxy-2-ethylhexanoate as the curing agent.

14. Mortar composition according to any of the preceding claims, wherein the mortar composition is composed of:
the radically curable resin in a proportion of 4.5 to 28.5 wt.%;
at least one reactive diluent in a proportion of 0 to 25 wt.%;
an organic peroxide in a proportion of 0.5 to 5 wt.%;
an accelerator in a proportion of 0 to 1.0 wt.%;
a polymerization inhibitor in a proportion of 0 to 0.2 wt.%;
CaO in a proportion of 5 to 25 wt.%;
an additional inorganic solid in a proportion of 15 to 65 wt.%; and
water in a proportion of 1 to 10 wt.%;
wherein the sum of all proportions amounts to 100 percent by weight, and wherein the weight ratio of CaO to the additional inorganic solids is at least 0.1.

15. Mortar composition according to any of the preceding claims, wherein the mortar composition is in a capsule, a cartridge or a film pouch, and wherein the resin component (A) and the hardener component (B) are arranged in separate chambers.

16. Use of the two-component mortar composition according to any of the preceding claims for the chemical fastening of components, such as anchor threaded rods, reinforcing bars, threaded sleeves and screws, in boreholes that are present in a mineral substrate.

## Revendications

1. Mélange de mortier à deux composants comportant un composant résine (A) qui contient, en tant que constituant durcissable, au moins une résine durcissable par voie radicalaire, et un composant durcisseur (B) qui contient un agent de durcissement pour la résine durcissable par voie radicalaire du composant résine (A), **caractérisé en ce que** le composant résine (A) et/ou le composant durcisseur (B) contiennent, en tant que constituant supplémentaire, au moins du CaO et au moins une matière solide inorganique supplémentaire, **caractérisé en ce que** la quantité totale de matières solides inorganiques plus CaO dans le mélange de mortier va de 40 à 75 % en poids, par rapport au poids total du mélange de mortier, et le rapport pondéral du poids total de CaO dans le mélange de mortier au poids total de matières solides inorganiques supplémentaires dans le mélange de mortier est d'au moins 0,1.

2. Mélange de mortier selon la revendication 1, dans lequel la quantité totale de matières solides inorganiques plus CaO dans le mélange de mortier va de 45 à 70 % en poids, de préférence de 50 à 70 % en poids, par rapport au poids total du mélange de mortier.

3. Mélange de mortier selon la revendication 1 ou 2, dans lequel le rapport pondéral du poids total de CaO dans le mélange de mortier au poids total de matières solides inorganiques supplémentaires dans le mélange de mortier est d'au moins 0,15, de préférence d'au moins 0,2.

4. Mélange de mortier selon l'une des revendications précédentes, dans lequel le CaO est présent dans une proportion allant de 2 à 30 % en poids, de préférence de 5 à 25 % en poids, de manière particulièrement préférée de 10 à 20 % en poids, par rapport au poids total du mélange de mortier.

5. Mélange de mortier selon l'une des revendications précédentes, dans lequel la matière solide inorganique supplémentaire est choisie parmi charges inorganiques, composés inorganiques à prise hydraulique ou pouvant être polycondensés, modificateurs et leurs mélanges.

6. Mélange de mortier selon la revendication 5, dans lequel la matière solide inorganique supplémentaire est présente dans une proportion allant de 10 à 73 % en poids, de préférence de 15 à 65 % en poids, de manière particulièrement préférée de 30 à 60 % en poids, par rapport au poids total du mélange de mortier.

7. Mélange de mortier selon l'une des revendications précédentes, dans lequel la matière solide inorganique supplémentaire comprend une charge choisie parmi BaSO_{4,} quartz, verre, corindon, porcelaine, faïence, barytine, sulfate de calcium, gypse, talc, cendre volante, craie ainsi que leurs mélanges.

8. Mélange de mortier selon l'une des revendications précédentes, dans lequel la matière solide inorganique supplémentaire comprend un composé inorganique à prise hydraulique ou pouvant être polycondensé choisi dans le groupe constitué de ciment et gypse et leurs mélanges, de préférence est un ciment d'aluminate.

9. Mélange de mortier selon l'une des revendications précédentes, dans lequel la matière solide inorganique supplémentaire comprend un modificateur choisi dans le groupe constitué d'épaississants, agents thixotropes et leurs mélanges, de préférence silice précipitée ou pyrogénée, bentonite et/ou kaolin.

10. Mélange de mortier selon l'une des revendications précédentes, dans lequel la résine durcissable par voie radicalaire est choisie parmi composés à base de (méth)acrylate d'uréthane, composés à base de (méth)acrylate d'époxy, méthacrylates de bisphénols alcoxylés, et composés à base d'autres composés éthyléniquement insaturés, dans lequel la résine durcissable par voie radicalaire est de préférence choisie parmi composés à base de (méth)acrylate d'uréthane, composés à base de (méth)acrylate d'époxy et méthacrylates de bisphénols alcoxylés, et dans lequel, de manière particulièrement préférée, la résine durcissable par voie radicalaire comprend une résine de (méth)acrylate d'uréthane.

11. Mélange de mortier selon l'une des revendications précédentes, dans lequel le composant résine (A) contient en tant qu'autre constituant au moins un diluant réactif.

12. Mélange de mortier selon l'une des revendications précédentes, dans lequel le composant résine (A) comprend en tant qu'autre constituant au moins un accélérateur.

13. Mélange de mortier selon l'une des revendications précédentes, dans lequel le composant durcisseur (B) contient en tant qu'agent durcisseur au moins un peroxyde organique, en particulier peroxyde de dibenzoyle, peroxyde de méthyléthylcétone, perbenzoate de tert-butyle, peroxyde de cyclohexanone, peroxyde de lauryle, hydroperoxyde de cumène et/ou peroxy-2-éthylhexanoate de tert-butyle.

14. Mélange de mortier selon l'une des revendications précédentes, dans lequel le mélange de mortier est composé :
de la résine durcissable par voie radicalaire dans une proportion allant de 4,5 à 28,5 % en poids ;
d'au moins un diluant réactif dans une proportion allant de 0 à 25 % en poids ;
d'un peroxyde organique dans une proportion allant de 0,5 à 5 % en poids ;
d'un accélérateur dans une proportion allant de 0 à 1,0 % en poids ;
d'un inhibiteur de polymérisation dans une proportion allant de 0 à 0,2 % en poids ;
de CaO dans une proportion allant de 5 à 25 % en poids ;
d'une matière solide inorganique supplémentaire dans une proportion allant de 15 à 65 % en poids ; et
d'eau dans une proportion allant de 1 à 10 % en poids ;
dans lequel la somme de toutes les proportions est égale à 100 pour cent en poids, et dans lequel le rapport pondéral du CaO aux matières solides inorganiques supplémentaires est d'au moins 0,1.

15. Mélange de mortier selon l'une des revendications précédentes, dans lequel le mélange de mortier se trouve dans une cassette, une cartouche ou un sachet en film, et dans lequel le composant résine (A) et le composant durcisseur (B) sont disposés dans des chambres séparées l'une de l'autre.

16. Utilisation du mélange de mortier à deux composants selon l'une des revendications précédentes pour la fixation chimique d'éléments tels que tiges filetées d'ancrage, barres d'armature, manchons filetés et vis, dans des trous de forage qui sont présents dans un sous-sol minéral.
